**Europäisches Patentamt**

**European Patent Office**

**Office européen des brevets**

(19)

(11) Numéro de publication: **0 142 433**

**A1**

(12) # DEMANDE DE BREVET EUROPEEN

(21) Numéro de dépôt: **84402247.5**

(22) Date de dépôt: **08.11.84**

(51) Int. Cl.⁴: **B 65 G 57/18**

(30) Priorité: **09.11.83 FR 8317827**

(43) Date de publication de la demande:
**22.05.85 Bulletin 85/21**

(84) Etats contractants désignés:
**BE DE GB IT LU NL**

(71) Demandeur: **Société Anonyme dite : SACILOR**
**6 rue de Wendel**
**F-57700 Hayange(FR)**

(72) Inventeur: **Fedeli, Roland**
**85 rue Maurice Thorez**
**F-54310 Homecourt(FR)**

(72) Inventeur: **Labolez, Emile**
**81 rue du Vieux Moulin**
**F-57159 Marange-Silvance(FR)**

(72) Inventeur: **Marchetto, Alain**
**2 rue Fouland**
**F-54117 Hatrize(FR)**

(72) Inventeur: **Nonnenmacher, Henri**
**86 rue Clémenceau**
**F-54240 Joeuf(FR)**

(72) Inventeur: **Paul, Yvan**
**1 Hameau Saint Rémy**
**F-57140 Woippy(FR)**

(72) Inventeur: **Periquet, Paul**
**24 route de Thionville**
**F-57920 Kedange Sur Canner(FR)**

(72) Inventeur: **Saccomano, Roman**
**27, rue des Hirondelles**
**F-57300 Mondelange(FR)**

(72) Inventeur: **Accini, Georges**
**Groupe Scolaire Hélène Defaut**
**F-54310 Homecourt(FR)**

(72) Inventeur: **Butscher, Claude**
**66 rue Haut-de-la-Marche**
**F-57159 Marange-Silvange(FR)**

(72) Inventeur: **Dentel, Albert**
**14 Faubourg des Argonnes**
**F-57240 Nilvange(FR)**

(72) Inventeur: **Eypert, Bernard**
**20 rue de Metz**
**F-57120 Rombas(FR)**

(74) Mandataire: **Hasenrader, Hubert et al,**
**Cabinet BEAU DE LOMENIE 55, rue d'Amsterdam**
**F-75008 Paris(FR)**

(54) **Procédé et dispositif d'empilage de cornières.**

(57) On prévoit :

a) des peignes (2) pour déterminer dans une nappe de cornières (C) une section de cornières successives (C1 à C7) devant constituer un lit (M) de cornières mariées,

et pour basculer, dans ladite section, une cornière (C2, C4,...) sur deux de sa position initiale en Λ à une position intermédiaire en L (C2', C4',...),

b) des moyens (4) pour basculer et maintenir les cornières basculées dans une position finale en V (C2", C4",...)

c) des moyens (T,5) pour resserrer des cornières (C1, C2", C3, C4") de la section finale en V, de manière à former un lit (M) de cornières mariées,

d) des moyens (7) pour disposer le lit (M) de cornières mariées sur les autres lits précédemment formés (M1,...).

./...

EP 0 142 433 A1

Fig. 2

PROCEDE ET DISPOSITIF D'EMPILAGE DE CORNIERES.

L'invention concerne l'empilage des cornières pour former des fardeaux de cornières constitués par la superposition de lits de cornières mariées, à partir d'une nappe de cornières disposées en Λ .

On entend par lit de cornières mariées une couche de n cornières adjacentes disposées en Λ recouverte d'une couche de n-1 cornières adjacentes disposées en V entre les cornières de la couche inférieure. De tels lits peuvent se superposer aisément, et on conçoit qu'on puisse ainsi faire des fardeaux compacts de cornières.

On a déjà proposé une mécanisation de l'empilage pour réaliser ces fardeaux. Les documents FR-A-1409111 et FR-A-1484113 témoignent de cet effort. Toutefois, dans ces essais de mécanisation, la réalisation d'un lit s'opère par la mise en place, dans une première phase, de la couche inférieure de cornières en Λ , suivie par la mise en place, dans une seconde phase, de la couche supérieure de cornières en V. Un tel principe s'impose d'ailleurs à l'esprit. Mais il s'avère que la mise en place de la couche de cornières en V n'est pas facile, ou nécessite un matériel trop élaboré. Dans le document FR-A-1409111, la couche de cornières en V est obtenue grâce à un système d'aimants qui saisissent des cornières adjacentes en Λ , les retournent en bloc, et les déposent sur la couche inférieure. Dans le document FR-A-1484113, on fait d'abord tomber rapidement les cornières devant former la première couche, de façon qu'elles ne se retournent pas, et on fait ensuite tomber lentement celles devant former la deuxième couche, de façon qu'elles se retournent: un tel procédé, particulièrement bruyant, manque de plus de fiabilité.

Le but de l'invention est de proposer un nouveau procédé d'empilage partant d'un principe entièrement différent, et permettant une mécanisation simple et fiable.

Ce but est atteint selon l'invention de la façon suivante :

a) on détermine dans la nappe une section de cornières successives devant constituer un lit de cornières mariées,

b) on bascule dans ladite section une cornière sur deux de sa position initiale en $\Lambda$ à sa position finale en V.

c) on maintient les cornières basculées dans ladite position finale en V,

d) on resserre des cornières de la section de manière à former un lit de cornières mariées,

e) on dispose le lit de cornières mariées sur les autres lits précédemment formés.

On voit donc que, selon l'invention, au lieu de travailler sur deux sections successives de cornières pour former un lit de cornières mariées, on travaille sur une seule section.

Avantageusement, pour basculer une cornière sur deux de sa position initiale en $\Lambda$ à sa position finale en V, on opère en deux phases :

b1) On déplace verticalement vers le haut le bord longitudinal d'une aile de la cornière dans la position initiale en $\Lambda$ relativement au bord longitudinal de l'autre aile, de manière à faire basculer la cornière dans une position intermédiaire en L,

b2) On déplace horizontalement le bord longitudinal de l'aile verticale de la cornière dans la position intermédiaire en L, relativement au bord longitudinal de l'autre aile, de manière à faire basculer la cornière dans la position finale en V.

L'invention concerne également un dispositif pour mettre en oeuvre le procédé ci-dessus. Un tel dispositif comprend des moyens pour réaliser les différentes étapes mentionnées.

Avantageusement, les moyens pour déterminer ladite section et les moyens pour déplacer verticalement vers le haut le bord longitudinal d'une aile sont constitués par au moins deux peignes mobiles verticalement entre une position basse où ils se trouvent sous la nappe de cornières et une position haute où ils se trouvent au dessus de ladite nappe, ces peignes comportant d'une part des dents destinées à s'emboîter dans les cornières devant rester dans leur position en Λ , et, entre deux dents, des enfoncements rectangulaires coopérant avec un rebord destiné à soulever un bord de la cornière à basculer.

Avantageusement, les moyens pour déplacer horizontalement le bord longitudinal d'une aile et les moyens pour maintenir une cornière basculée dans sa position en V, sont constitués par un volet horizontal placé au dessus du lit en formation sensiblement au niveau du sommet des cornières en Λ , ce volet coopérant avec des moyens d'entraînement latéral horizontal des cornières.

Avantageusement, les moyens de resserrement des cornières comprennent des butées latérales fixes coopérant avec des moyens d'entraînement latéral par friction des cornières.

Avantageusement, les moyens pour disposer le lit de cornières mariées sur les autres lits précédemment formés comprennent un ensemble de manutention mobile verticalement et horizontalement, comportant des bras supports horizontaux s'étendant perpendiculairement aux cornières.

Le dispositif de l'invention s'applique en particulier aux transporteurs d'évacuation des profilés laminés en provenance d'installations de parachèvement de trains à fers marchands.

Les caractéristiques et avantages de l'invention apparaîtront mieux à la lecture de la description qui suit d'un mode préférentiel de réalisation du dispositif d'empilage, donné à titre d'exemple non limitatif et en référence aux dessins annexés sur lesquels :

    - la figure 1 représente schématiquement, vu de dessus, un transporteur à chaînes connu équipé du dispositif selon l'invention;

    - la figure 2 est une vue en élévation de la moitié du dispositif suivant la ligne II-II de la figure 1;

    - les figures 3a à 3d sont des agrandissements partiels d'un peigne de la figure 2 (détail III) dans quatre positions remarquables montrant le processus du basculement sélectif des cornières au cours de la montée des peignes;

-la figure 4 est une vue en élévation d'un mode préférentiel de réalisation d'un volet de mariage pourvu d'un lest et d'un taquet selon l'invention;

- la figure 5 est une vue de dessus d'un mode préférentiel de réalisation d'un bras empileur pourvu de butées et d'une palette à éclipse selon l'invention;

- les figures 6a et 6b sont des vues en coupe suivant la ligne VI-VI de la figure 5 montrant la palette à éclipse respectivement en position de transport et en position d'empilage;

- les figures 7a et 7b sont des sections suivant la ligne VII-VII de la figure 5 montrant la palette à éclipse respectivement en position de transport et en position d'empilage;

- la figure 8 est une vue en élévation de la zone z6 du transporteur T1 montrant le processus de pose des lits de cornières mariées au moyen de bras d'empilage de longueur différente, selon un autre mode préférentiel de réalisation.

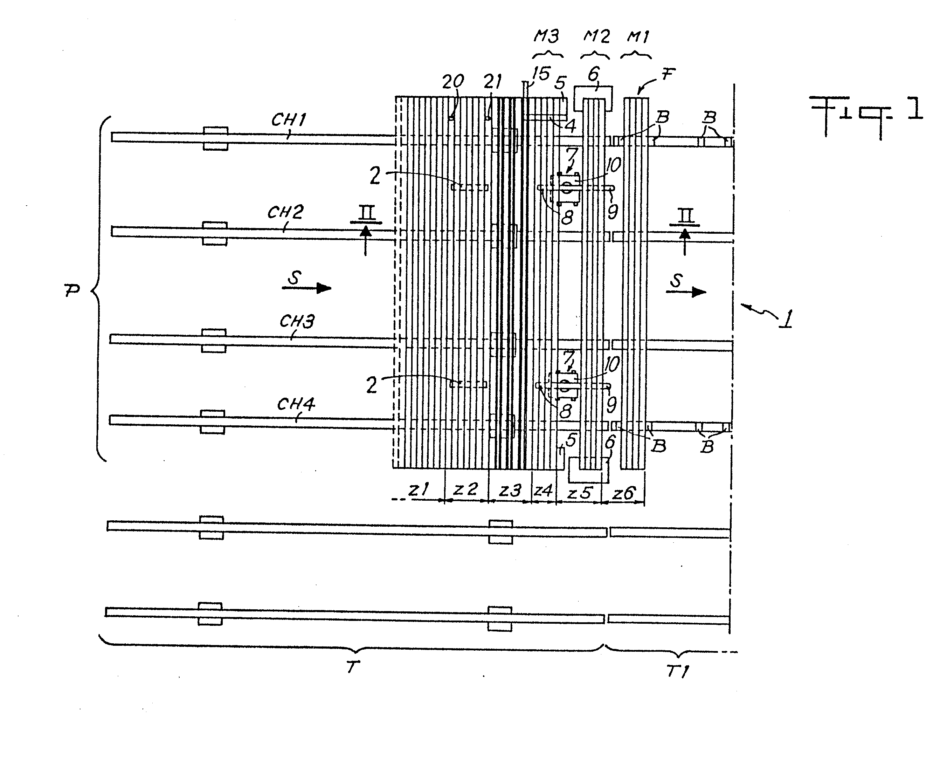

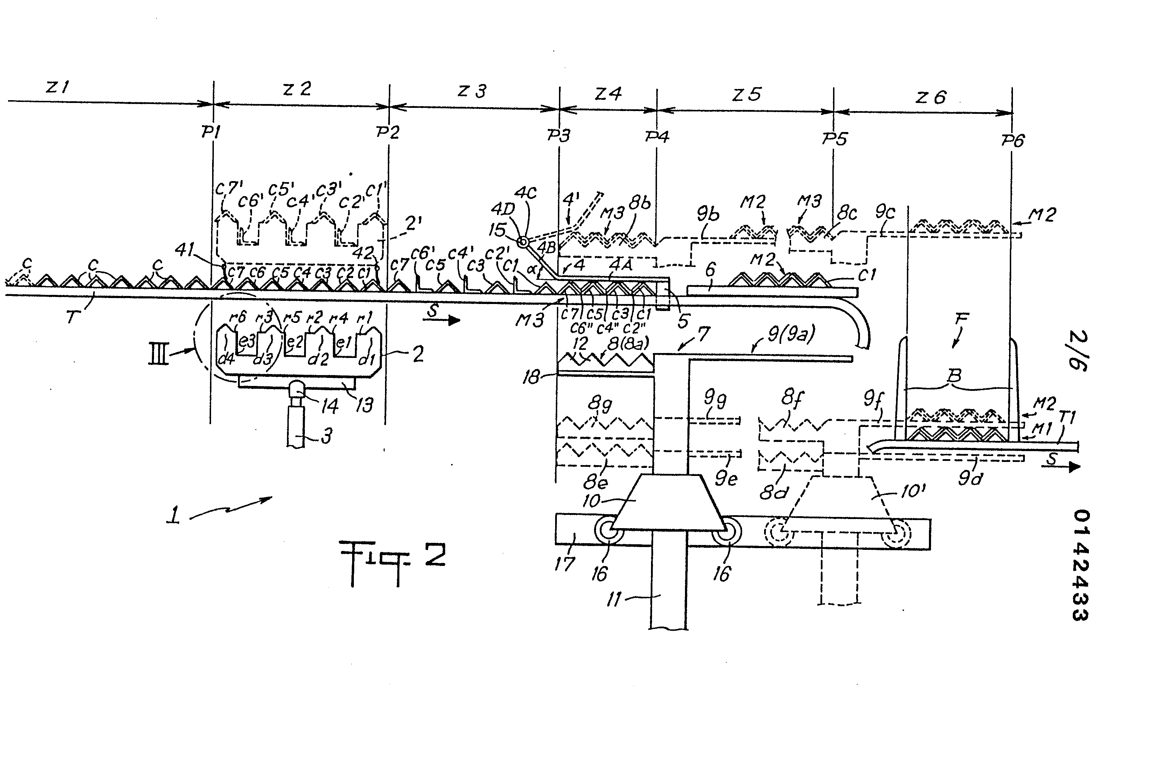

Dans l'exemple de réalisation préférentiel représenté aux figures 1 et 2, on peut voir le dispositif d'empilage automatique de cornières 1 de l'invention en fonctionnement tel que monté sur la partie aval d'un transporteur à chaînes T. Dans cet exemple, seule une plage P du transporteur T utilisant quatre chaînes CH1 à CH4 est équipée du dispositif d'empilage. Cette plage qui s'applique aux cornières de six mètres de long n'est pas limitative, le dispositif d'empilage pouvant équiper une plage plus ou moins étendue du transporteur T correspondant aux longueurs des cornières à empiler.

Le transporteur T, qui est installé au parachèvement d'un train à fers marchands, en aval d'un train de rouleaux d'évacuation des profilés laminés, permet l'acheminement de ces profilés vers un autre transporteur à chaînes T1 équipées de berceaux réglables B entre lesquels sont constitués les fardeaux F, ceux-ci étant ensuite dirigés vers le chantier de paquetage. Le sens d'avance des transporteurs T et T1 est indiqué par les flèches S.

Le dispositif d'empilage 1 permet la constitution de fardeaux F de cornières C identiques. Celles-ci sont du type à ailes égales dans l'exemple considéré. Le dispositif qui est pourvu d'éléments spécifiques interchangeables (2 et 8) s'applique également à l'empilage des cornières du type à ailes inégales, voire à d'autres profilés par substitution desdits éléments. Les fardeaux sont formés par un empilage de lits M de cornières C mariées. Il est à préciser qu'on entend par lit M de cornières mariées une pluralité de cornières, en nombre impair, au moins trois, disposées en deux couches alternées, les cornières de la couche inférieure reposant côte à côte, chacune sur le bord de leurs deux ailes, dans une position de V inversé (désignée par le signe $\Lambda$ dans la suite du texte) et les cornières de la couche supérieure, en nombre égal moins un à celles de la couche inférieure, étant retournées de 180° par rapport à celles de la couche inférieure dans une position de V et posées dans les espaces compris entre les cornières de la couche inférieure. L'empilage d'une pluralité de lits M conduit à l'imbrication des cornières entre elles d'où une grande stabilité pour un faible encombrement des fardeaux F ainsi formés. Dans l'exemple considéré, chaque lit M du fardeau F comprend sept cornières à ailes égales, quatre cornières en position $\Lambda$ formant la couche inférieure du lit et trois cornières en position V formant la couche supérieure du lit. Les autres combinaisons possibles par exemple six cornières inférieures pour cinq supérieures se font par remplacement des éléments interchangeables (2 et 8) du dispositif d'empilage 1.

La description qui suit du dispositif d'empilage 1 sera faite en partant de la fonction de chacun de ses éléments en situant ceux-ci dans leurs zones d'action respectives. En partant dans le sens d'avance S des cornières sur les transporteurs T et T1, les zones repérées sont les suivantes :

Zone z 1 du transporteur T :

-zone amont d'amenée des cornières. Cette zone est alimentée par une nappe continue de cornières C provenant d'un train de rouleaux d'évacuation des cornières, non représenté. Les cornières sont posées transversalement côte à côte en position $\Lambda$ .

Zone z 2 du transporteur T :

-zone de pré-basculement sélectif des cornières. La largeur de cette zone est déterminée en fonction du lit de cornières M désiré. Pour un lit M composé d'un total de $\underline{n}$ cornières à ailes égales de largeur $\underline{1}$, la largeur de la zone z 2 sera égale à $\underline{n1} \sqrt{2}$. Cette zone est occupée par une nappe de sept cornières C1 à C7 placées côte à côte en position $\Lambda$ et provenant de la zone z 1. Dans cette zone on fait passer une cornière sur deux de sa position initiale $\Lambda$ à une nouvelle position dans laquelle elle repose sur la face extérieure d'une aile, son autre aile placée verticalement étant située du côté amont du transporteur. La position des cornières ainsi basculée de $135^{o}$ sera désignée dans la suite du texte par la lettre L.

Zone z 3 du transporteur T :

-zone neutre (facultative). Cette zone est occupée par les sept cornières C1, C2', C3, C4', C5, C6' et C7, provenant de la zone z 2 (l'affectation du signe "prime" au numéro de la cornière indique ici que la cornière a conservé sa nouvelle position : position en L). La zone z 3 présente la même largeur que la zone z 2 ou une largeur multiple. Elle peut également être supprimée dans une autre configuration.

Zone z 4 du transporteur T :

-zone de formation des lits M de cornières mariées. Dans cette zone, on fait basculer successivement de $45^{o}$ les trois cornières en position L (C2', C4' et C6') de la nappe de sept cornières provenant de la zone z 2 pour les faire passer à une nouvelle position V (C2", C4" et C6"), dans laquelle elles reposent sur leur arête centrale extérieure. Puis on resserre progressivement les sept cornières les unes contre les autres. La largeur de la zone z 4 qui correspond à la largeur de la couche inférieure du lit M, autrement dit à la largeur finale du lit voulu, est égale à $\frac{n + 1}{2} 1\sqrt{2}$, $\underline{n}$ étant le nombre total de cornières composant les deux couches du lit M et $\underline{1}$ étant la largeur de l'aile. La zone z 4 présente donc une largeur correspondant au 4/7ème de la largeur des zones z 2 ou z 3.

Zone z 5 du transporteur T :

—zone d'attente des lits M de cornières mariées en provenance de la zone z 4. La zone z 5 présente une largeur correspondant à la largeur du plus grand lit M pouvant être réalisé par le dispositif de l'invention.

Zone z 6 du transporteur T :

—zone d'empilage des lits M provenant de la zone z 5. La zone z 6 présente sensiblement la même largeur que la zone z 5.

Le dispositif d'empilage comprend principalement :

- au moins deux peignes spécifiques 2 identiques, mobiles verticalement grâce à des vérins élévateurs 3 pour le pré

- basculement sélectif des cornières en zone z 2. Ces peignes qui comportent une pluralité de dents sont interchangeables;

- au moins un volet 4 mobile en rotation et deux butées 5 pour le mariage des cornières en zone z 4;

- au moins deux supports 6 formant une table d'attente 6 pour la pose en zone z 5, des lits M de cornières mariées provenant de la zone z 4;

- au moins deux systèmes de manutention et d'empilage 7 des lits M comprenant chacun un râteau spécifique 8 et un bras 9, mobiles horizontalement et verticalement grâce à un chariot de translation 10 équipé de vérin élévateur 11 pour le transport simultané d'une part du lit M de la zone z 4 à la table d'attente 6 à l'aide des râteaux 8 et d'autre part du lit M de la table 6 à la zone d'empilage z 6 à l'aide des bras 9. Les râteaux 8 qui comportent une pluralité de dents 12 sont interchangeables. A l'exception des bras 9 qui peuvent présenter une longueur différente, les systèmes 7 sont identiques. La commande des vérins 11 est couplée de même que celle des chariots 10.

Les peignes 2 sont mobiles verticalement. Ils sont montés en parallèle symétriquement dans la zone z 2, l'un entre les chaînes CH1 et CH2, l'autre entre les chaînes CH3 et CH4. En position de repos ou position basse 2; ils se trouvent à un niveau inférieur à la surface supérieure des chaînes du transporteur T et

8  0142433

en fin de course en position haute 2' ils se trouvent à un niveau supérieur à celles-ci. Les peignes 2 sont placés longitudinalement sur des axes horizontaux parallèles aux chaînes du transporteur, les dents des peignes, toutes de même hauteur, étant verticales et pointées vers le haut. Autrement dit, le plan vertical passant par toutes les dents d'un même peigne (en négligeant l'épaisseur du peigne) est orthogonal au plan bissecteur des cornières en position $\wedge$ posées sur le transporteur. Un vérin 3 monté sous chaque peigne assure leur déplacement vertical. Les peignes 2 sont fixés de façon amovible sur une glissière 13 fixée sur la chape 14 des pistons des vérins 3. La partie basse des vérins 3, non figurée, est fixée sur la charpente du transporteur T. La commande des deux vérins 3 est couplée pour permettre le déplacement simultané des peignes 2. Les peignes 2 étant identiques, un seul sera décrit en détail par simplification. Le peigne 2 qui comporte un nombre de dents égal au nombre de cornières choisi pour former la couche inférieure du lit M présente une longueur légèrement inférieure à celle de la zone z 2, sensiblement égale à $n\_1 \sqrt{2} - 2e$ , e étant l'épaisseur de la cornière. Le peigne 2 comporte quatre dents identiques d1 à d4 régulièrement espacées entre elles et présentant chacune une extrémité de forme triangulaire correspondant à la forme et aux dimensions de l'espace triangulaire délimité, en section droite, par les faces intérieures des ailes de la cornière, les extrémités triangulaires des dents d1 à d4 étant positionnées pour venir s'emboîter précisément dans la partie concave des cornières respectivement C1, C3, C5 et C7. Trois intervalles ou encoches e1 et e3 séparent respectivement les dents d1 et d2; d2 et d3; d3 et d4. Le nombre d'encoches correspond au nombre de cornières à basculer formant la couche supérieure du lit M. Des rebords horizontaux r1 à r3 présentant chacun une largeur égale à au moins 2 épaisseurs de cornière relient respectivement les dents d1 à d3 aux encoches e1 à e3. Des rebords horizontaux r4 à r6 présentant chacun une largeur légèrement inférieure à l'épaisseur e de la cornière relient respectivement les dents d2 à d4 aux encoches e1 à e3. Les encoches e1 à e3 présentent chacune une largeur et une profondeur supérieures à la largeur d'aile des cornières.

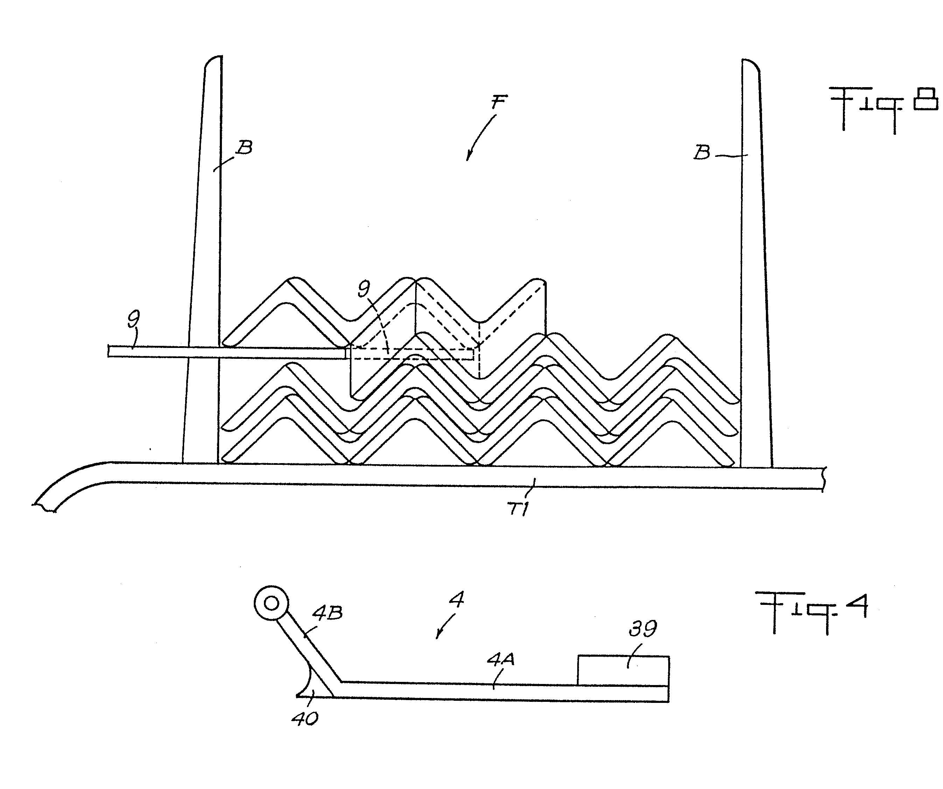

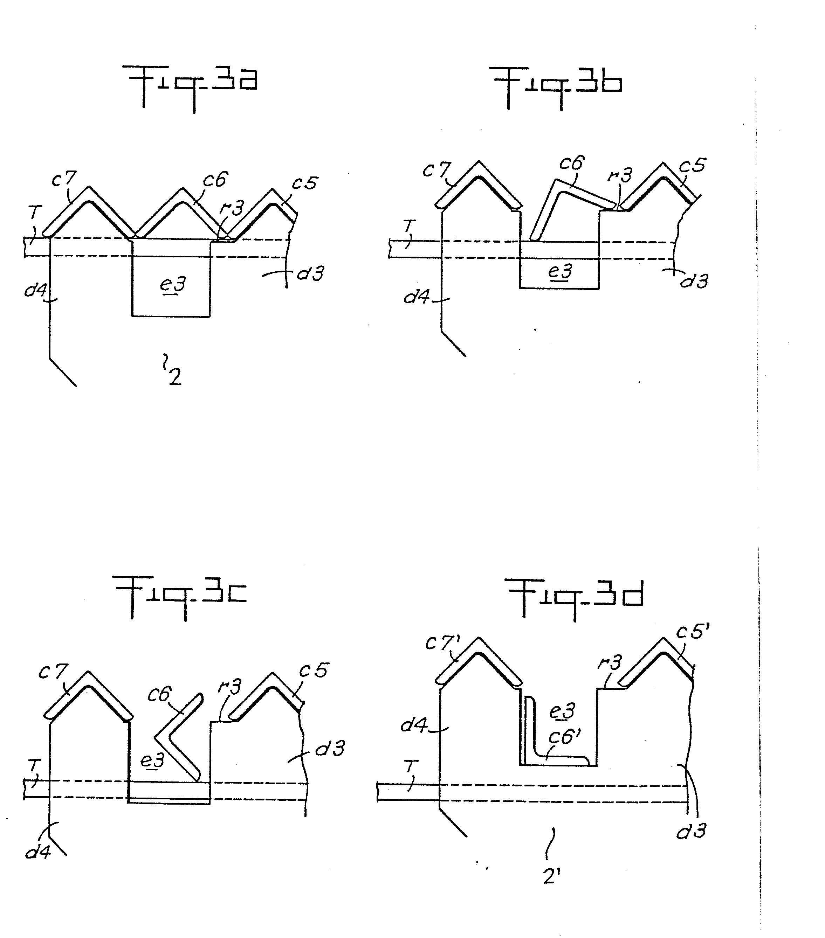

Le champ d'action des peignes 2 se limite à la zone z 2 du transporteur T sur laquelle repose une nappe de sept cornières C1 à C7 en position $\Lambda$. Les peignes 2 ont pour fonction de faire basculer sur elles-mêmes de 135° les cornières C2, C4 et C6 pour qu'elles occupent une position L respectivement C2', C4' et C6', ceci sans modifier finalement la position $\Lambda$ des autres cornières C1, C3, C5 et C7. Cette fonction, qui est assurée pendant une séquence d'arrêt du transporteur T, est remplie en deux temps successifs par les peignes 2 actionnés simultanément par les vérins 3. Dans un premier temps, les peignes 2 partant de leurs positions basses 2 montent pour aller occuper leurs positions hautes 2'. Le processus de basculement des cornières qui va maintenant être décrit sera aisément compris en se reportant aux figures 3a à 3d qui montrent quatre positions remarquables des peignes au cours de leur montée. Lors de la montée, les extrémités triangulaires des dents d1 à d4 des peignes s'emboîtent respectivement dans les parties concaves des cornières C1, C3, C5 et C7 (figure 3a) les faisant ainsi simplement monter à leurs positions hautes respectives C1', C3', C5' et C7' (figure 3d) en même temps que les rebords r1, r2 et r3 du peigne viennent soulever progressivement les ailes aval des cornières C2, C4 et C6, les autres ailes de ces cornières, placées en regard des encoches ou enfoncements e1, e2 et e3 restant en appui sur les chaînes du transporteur (figure 3b). Ainsi mises en porte-à-faux, les cornières C2, C4 et C6 basculent progressivement sur elles-mêmes(figures 3c) en effectuant un mouvement de rotation transversal de 135° pour occuper, lorsque le peigne est en position haute 2', leurs positions L respectives C2', C4' et C6' (figure 3d) dans lesquelles elles reposent sur le fond plat des encoches e1, e2 et e3.

Dans un deuxième temps les peignes redescendent pour regagner leurs positions basses 2. Au passage, les cornières sont redéposées sur les chaînes du transporteur, d'abord les trois cornières précédemment basculées qui restent dans leurs positions L C2', C4' et C6', ensuite les quatre cornières en position X C1', C3', C5' et C7' qui reprennent leurs positions initiales C1, C3, C5 et C7. Cette nouvelle disposition des cornières qui n'est pas représentée en zone z 2 afin de ne pas surcharger la figure 1 apparaît clairement à la zone z 3 du transporteur où l'on peut voir les sept cornières C1, C2', C3, C4', C5, C6' et C7 provenant de la zone z 2.

Le volet 4 de mariage (voir figure 1 et 2) est constitué d'une barre, un fer plat par exemple, plié dans le sens de sa largeur pour former un coude présentant une partie 4A (de longueur au moins égale à celle de la zone z 4) raccordée à une partie 4B inclinée par rapport à la partie 4A d'un angle $\alpha$ de valeur comprise entre 30 et 60°. Sur l'extrémité libre de la partie 4B est fixée une tête d'articulation 4C comportant un alésage 4D orienté suivant un axe parallèle à la largeur du volet 4. La tête 4C peut être réalisée plus simplement en enroulant l'extrémité de la partie 4B de sorte à former une boucle. Le volet 4 est monté rotatif par son alésage 4D sur l'extrémité libre d'un axe cylindrique horizontal 15 placé transversalement au-dessus du transporteur en zone z3 à proximité de la chaîne CH1. L'axe 15 est monté à son autre extrémité sur un support réglable (non figuré) fixé à la charpente environnante et permettant de régler la position de l'axe 15 et, partant, la position du volet 4 d'une part latéralement en fonction de la largeur de lit M voulue, et d'autre part verticalement en fonction de la dimension des cornières à marier, ledit axe devant être positionné en hauteur - par rapport à la surface supérieure des chaînes du transporteur- à une distance supérieure à la largeur d'aile des cornières à marier. La retenue et le positionnement latéral du volet 4 sont assurés par des moyens connus non figurés, par exemple par des goupilles fixées de part et d'autre de la tête 4C. En position basse, la partie 4A du volet 4 occupe une position longitudinale parallèle à celle des chaînes du transporteur, le plan passant par l'axe longitudinal des parties 4A et 4B du volet 4 étant vertical.

La partie 4A qui passe horizontalement au-dessus de la zone z 4 est positionnée par rapport à la surface supérieure des chaînes du transporteur, à une distance correspondant sensiblement à la hauteur ($l\sqrt{2}$ / 2 ) des cornières en position $\wedge$, l'extrémité libre de la partie 4A reposant de préférence sur une butée 5 placée sur la partie amont de la zone z 5. La partie 4B reliant l'axe 15 à la partie horizontale 4A occupe dans la partie aval de la zone z 3 une position inclinée vers le haut d'un angle préférentiel de 45°. Comme on le verra plus loin, le volet 4 pivote autour de son axe 15 pour occuper une position haute 4' lorsque le lit M de cornières formée en zone z 4 est transporté en zone z 5.

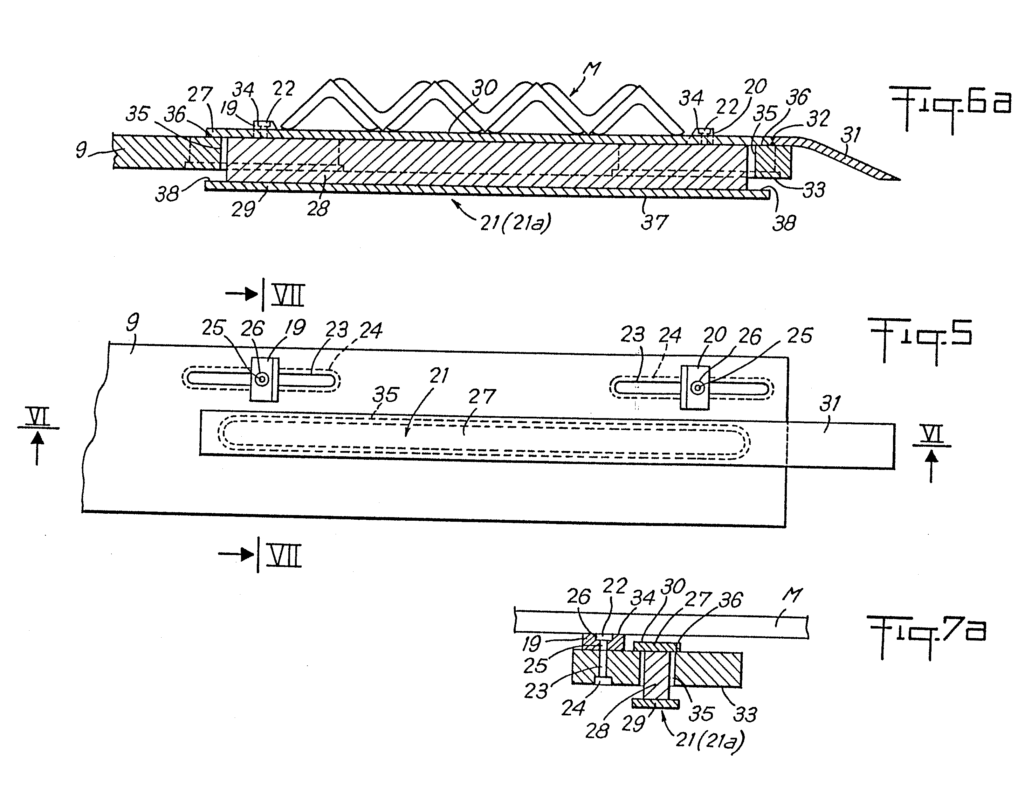

Suivant un mode préférentiel de réalisation (voir figure 4) un lest 39 dont le poids est déterminé en fonction du type de cornières à marier, est monté de façon amovible sur la partie 4A du volet 4 à l'aide de moyens d'assemblage tels des vis, non figurés. D'autre part, un taquet 40 de forme générale triangulaire est fixé par soudure contre la face amont de la partie 4B du volet 4, la base du taquet étant située dans le prolongement de la base de la partie 4A. Le lest 39 et le taquet 40 permettent de faciliter le basculement sélectif des cornières de leurs positions L à leurs positions V d'où une plus grande fiabilité de fonctionnement.

Les butées 5 (voir figures 1 et 2) sont avantageusement constituées par de simples tronçons de barres de section quelconque, rectangulaire dans l'exemple considéré. Elles sont montées symétriquement dans la partie amont de la zone z 5 l'une à proximité de la chaîne CH1, l'autre à proximité de la chaîne CH4. Elles sont positionnées verticalement de sorte que le plan passant par leurs faces longitudinales amont soit orthogonal à la surface supérieure des chaînes du transporteur T, lesdites faces amont ou faces de butée proprement dites, étant situées juste entre les zones z 4 et z 5. Les butées 5 sont montées chacune par leurs extrémités inférieures sur un support réglable, non figuré, fixé à la charpente environnante, sous les chaînes du transporteur T, leurs extrémités supérieures étant situées au dessus du niveau de la surface supérieure des chaînes à une distance correspondant sensiblement à la hauteur ($l\sqrt{2}$ / 2) des cornières en position $\Lambda$. Les butées 5 sont déplaçables d'une part latéralement pour permettre la formation de lits M aux largeurs voulues et d'autre part verticalement en fonction de la dimension des cornières à marier.

Le volet 4 coopère avec les butées 5 pour marier les cornières en zone z 4.

Le volet 4 a pour fonction préliminaire de faire successivement basculer de $45°$ les cornières C2', C4' et C6' en position L de la nappe de cornières provenant de la zone z 3 pour les faire passer à une nouvelle position V, ceci sans modifier la position $\Lambda$ des autres cornières C1, C3, C5 et C7 de ladite nappe.

Les butées 5 qui permettent d'achever la formation du lit M ont pour fonction de resserrer entre elles successivement les 7 cornières de manière qu'elles occupent leurs positions finales C1, C2", C3, C4", C5, C6" et C7.

Ces deux fonctions complémentaires sont assurées pendant que le transporteur T se déplace d'un pas, c'est-à-dire d'une distance égale à la longueur de la zone z 2.

Lorsque le transporteur avance d'un pas, la première cornière C1 en position $\Lambda$ de la nappe de cornières en positions alternées ($\Lambda$,L) provenant de la zone z 3 passe librement sous la partie 4A du volet sans la toucher ou en la frôlant légèrement. Lorsque la deuxième cornière C2' en position L arrive au point P3, l'extrémité de son aile verticale entre en butée contre la partie basse 4B du volet 4 ou le cas échéant contre le taquet 40 fixé sur celle-ci. Le transporteur continuant d'avancer et le volet 4 (éventuellement lesté et dont le poids a été déterminé pour ne pas se relever sous l'action de la poussée de la cornière qui avance) restant à sa position basse, la cornière C2' bascule progressivement de $45°$ pour occuper une nouvelle position V dans laquelle elle repose sur son arête centrale, après quoi elle conserve cette position et passe sous la partie 4A du volet 4 en

frôlant légèrement celle-ci. Le cycle se reproduit de la même manière pour les cinq autres cornières de la nappe. Au moment où la cornière C4' arrive au point P3, la première cornière C1 en position ∧ arrive au point P4 contre les butées 5 et s'arrête, bien que le transporteur continue d'avancer (effet de ripage). La deuxième cornière en position V vient ensuite en butée contre la cornière C1 pour occuper la position finale C2". Le cycle se reproduit de la même manière pour les cinq autres cornières, après quoi le transporteur s'arrête.

Le champ d'action des deux systèmes de manutention et d'empilage 7 des lits M s'étend de la zone z 4 du transporteur T à la zone z 6 du transporteur T1. Ils sont montés en parallèle symétriquement, l'un entre les chaînes CH1 et CH2, l'autre entre les chaînes CH3 et CH4. Les deux systèmes 7 étant identiques à l'exception de leurs bras 9 qui peuvent présenter une longueur différente, un seul sera décrit.

Chaque système 7 comprend un râteau 8 et un bras 9 fixés horizontalement en opposé sur l'extrémité supérieure du piston d'un vérin vertical 11 monté traversant au milieu d'un chariot de translation 10 motorisé. Le chariot 10 qui est situé à un niveau inférieur aux chaînes du transporteur T1 est mobile horizontalement dans une direction parallèle aux chaînes du transporteur T. Il est monté sur quatre galets 16 se déplaçant dans des chemins de roulement 17, sa course couvrant les zones z 4 à z 6. Le râteau 8 et le bras 9 situés respectivement côté amont et côté aval sont placés longitudinalement sur un axe parallèle aux chaînes du transporteur T, les dents 12 du râteau —toutes de même hauteur— étant verticales et pointées vers le haut. Le râteau 8 est fixé de façon amovible sur le piston du vérin 11 par l'intermédiaire d'un support 18. Il comporte un nombre de dents égal au nombre de cornières choisi pour former la couche inférieure du lit M et présente une longueur légèrement inférieure à celle de la zone z 4. Dans l'exemple considéré le râteau 8 comporte quatre dents identiques 12 disposées côte à côte et présentant une forme triangulaire correspondant à la forme et aux dimensions de l'espace triangulaire délimité, en section droite, par les faces intérieures des ailes de la cornière, les dents 12 étant positionnées pour venir s'emboîter précisément dans la partie concave des cornières C1, C3, C5 et C7 du lit M formé en zone z 4. Le bras 9 est fixé solidaire sur le piston du vérin 11. Il présente de préférence une section rectangulaire et est disposé à plat. Son extrémité libre peut être effilée. Sa longueur est au moins égale à celle de la zone z 5.

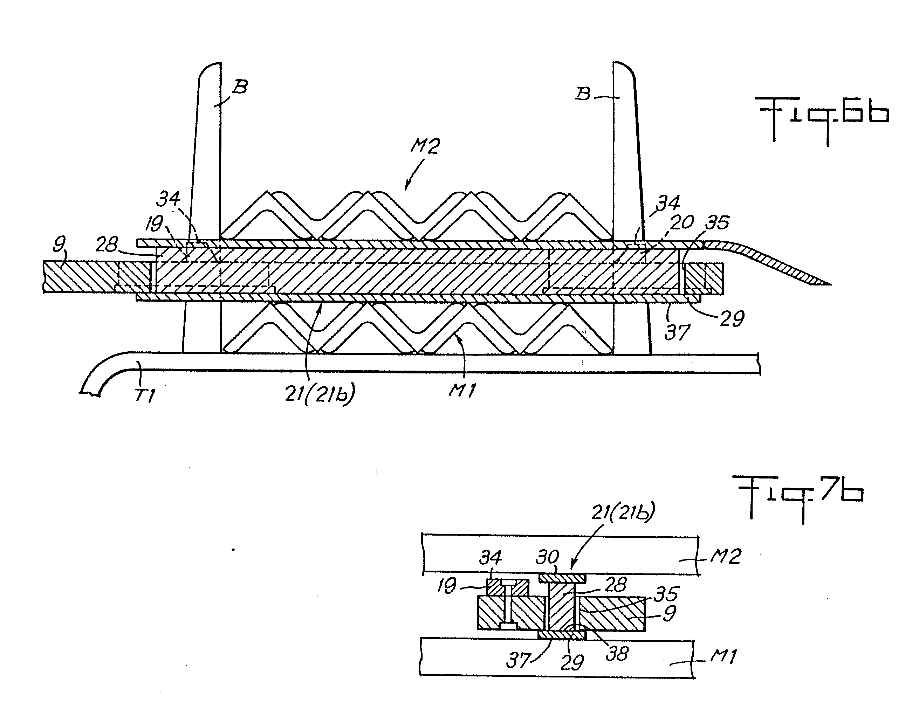

Suivant un mode préférentiel de réalisation, l'un des bras 9 des systèmes 7 est plus long que l'autre, la différence de longueur étant au moins égale à la dimension de cornière $1\sqrt{2}$. Comme on le verra plus loin, cette disposition permet de faciliter l'empilage des lits M en zone z 6. Suivant un autre mode préférentiel de réalisation et quelle que soit la longueur des bras, le bras 9 (voir figures 5, 6a, 6b, 7a, 7b) est pourvu de deux butées à espacement réglable amont 19 et aval 20 pour le maintien du lit M transporté, ainsi que d'une palette à coulisse 21 servant de support proprement dit au lit M transporté. La palette 21 est mobile verticalement pour permettre l'éclipsage des butées 19, 20 lors de l'empilage du lit M en zone z 6. La fixation de chaque butée 19, 20 sur le bras 9 s'effectue à l'aide d'une vis à tête cylindrique à pans creux et d'un écrou indiqués par la référence 22. Le réglage de la position des butées en fonction de la largeur du lit M voulue est obtenu grâce à deux lumières longitudinales 23 ménagées dans le bras 9. Les lumières 23, qui sont situées sur un même axe longitudinal, décalé par rapport à l'axe longitudinal du bras 9, comportent chacune un lamage 24 débouchant sur la face inférieure de ce dernier pour le logement de l'écrou de fixation 22, les butées 19, 20 sont percées chacune d'un trou 25 comportant un lamage cylindrique 26 débouchant sur leurs faces supérieures pour le logement de la tête de vis de fixation 22. La palette 21 se présente sous forme d'un profilé de section en I constitué par l'assemblage de trois éléments de section rectangulaire. L'élément formant l'aile supérieure 27 du I est soudée sur l'élément formant l'âme 28 du I, tandis que l'élément formant l'aile inférieure 29 du I est fixé de façon amovible sur l'âme 28 par des vis non représentées. L'aile supérieure 27 présente une surface supérieure 30 placée dans un plan horizontal et servant de support aux lits M transportés. L'aile supérieure 27 est prolongée du côté de son extrémité aval par un déflecteur 31 dirigé vers le bas et dont l'extrémité libre se situe à un niveau supérieur à la base de la palette 21.

Le déflecteur 21 est fixé par soudure 32. La palette 21 présente une longueur correspondant à la largeur du plus grand lit M pouvant être transporté par le bras 9 et sa hauteur est supérieure à l'épaisseur de ce dernier. Plus précisément, la hauteur du T formé par l'aile supérieure 27 et l'âme 28 est au moins égale à la distance comprise entre la face inférieure 33 du bras 9 et la face supérieure 34 des butées 19, 20. Une lumière longitudinale 35, de dimensions légèrement supérieures à la section droite longitudinale de l'âme 28, est ménagée dans la partie médiane du bras 9. Pour monter la palette 21 dans le bras 9, on introduit l'âme 28 du T dans la lumière 35 puis on fixe l'aile inférieure 29 à l'aide de vis. Ainsi montée prisonnière, la palette 21 peut coulisser verticalement par son âme 28 dans la lumière 35.

Les râteaux 8 et les bras 9 des systèmes 7 (voir figure 2) qui sont mobiles verticalement et horizontalement dans une direction parallèle aux chaînes du transporteur T décrivent en cycle normal de fonctionnement automatique une trajectoire rectangulaire en quatre temps.

Dans un premier temps, partant de leurs positions amont en zones z 4, z 5, ils sont mobiles verticalement de bas en haut entre leurs différentes positions, basses 8e, 9e et intermédiaires 8a, 9a et autres dans lesquelles ils se trouvent à un niveau inférieur à la surface supérieure des chaînes du transporteur T et leurs positions hautes 8b, 9b, dans lesquelles ils se trouvent à un niveau supérieur à la surface des chaînes du transporteur T, grâce à l'action des vérins élévateurs 11. Comme on le verra plus loin, au cours de ce déplacement, les râteaux 8 et les bras 9 soulèvent au passage successivement et respectivement le lit M formé en zone z 4 et le lit M posé en attente sur la table 6 en zone z 5. Lors de la montée, les dents 12 du râteau 8 s'emboîtent dans les parties concaves des cornières C1, C3, C5 et C7 du lit M de la zone z 4, faisant ainsi monter ce dernier. En montant, le lit M soulève le volet 4 qui pivote autour de son axe 15 sous l'effet de la poussée pour occuper une position haute 4'. Un fin de course, non figuré, commande l'opération suivante dès que les râteaux et les bras atteignent leurs positions hautes 8b, 9b.

Dans un deuxième temps ils sont mobiles horizontalement d'amont en aval entre leurs positions hautes 8b, 9b et leurs positions hautes 8c, 9c en zone z 5, z 6, grâce aux chariots de translation 10 qui passent de leurs positions amont 10 à leurs positions aval 10'. Ainsi, les lits M provenant de la zone z 4 et de la zone z 5 se trouvent respectivement en fin de course, en zone z 5 et z 6 et le volet 4 qui reposait dans sa position 4' sur le lit M en zone z4 retrouve sa position basse 4 après être redescendu de son propre poids. Un fin de course, non figuré, commande l'opération suivante dès que les râteaux et les bras atteignent leurs positions 8c, 9c.

Dans un troisième temps, grâce à l'action des vérins 11, ils sont mobiles verticalement de haut en bas entre leurs positions hautes 8c, 9c et leurs différentes positions, basses 8d, 9d et intermédiaires 8f, 9f et autres. Au cours de ce déplacement les râteaux 8 et les bras 9 déposent au passage successivement et respectivement le lit M provenant de la zone z 4 sur la table 6 de la zone z 5 et le lit M provenant de la zone z 5 entre les berceaux B sur le transporteur T1 en zone z6. Il est à préciser que la descente du vérin 11 peut être libre avec freinage hydraulique et que d'autre part un fin de course non figuré commande l'opération suivante dès que les bras atteignent leurs différentes positions 9d, 9f et autres. Lors de la pose du premier lit M, les bras 9 descendent et s'arrêtent à un niveau inférieur à la surface supérieure des chaînes du transporteur T1 pour occuper leurs positions basses 9d. Lors de l'empilage des lits M suivants les bras 9 descendent et s'arrêtent à un niveau supérieur aux chaînes du transporteur T1 pour occuper une position dans laquelle ils viennent reposer sur le lit M précédemment posé. Les bras 9 occupent la position 9f lors de l'empilage du deuxième lit. Les autres positions des bras 9 lors de l'empilage des lits M suivants n'ont pas été représentées pour ne pas surcharger la figure 2. Le processus de pose du premier lit M et d'empilage des autres lits M à l'aide des bras 9 pourvus de butées 19, 20 et d'une palette 21 est le même que celui qui vient d'être décrit. On apportera toutefois les précisions suvantes : en position de transport 21a (voir figures 5, 6a, 7a) la palette 21 repose par gravité sur la face supérieure du bras 9 par sa face d'appui inférieure 36 de l'aile supérieure 27. Dans cette position les butées 19 et 20 font saillie empêchant ainsi le lit M posé sur la surface support 30 de la palette 21 de se défaire au cours du transport. Lors de la descente du bras 9 pour l'empilage du deuxième lit M2 (voir figures 5, 6b, 7b) la face d'appui inférieure 37 de l'aile inférieure 29 de la palette 21 vient d'abord reposer sur le lit M1 précédemment posé. Le bras 9 continuant de descendre en coulissant par sa lumière 35 autour de l'âme 28 termine sa course contre la face d'appui supérieure 38 de l'aile inférieure 29 de la palette 21. Cette dernière occupant alors sa position d'empilage 21b. Dans cette position les faces supérieures 34 des butées 19, 20 se trouvent à un niveau inférieur à celui de la surface support 30 de la palette 21 sur laquelle repose le lit M2 à empiler. Les butées 19, 20 étant ainsi éclipsées, les bras 9 –partant la palette 21– peuvent se retirer sans obstacle. L'empilage des lits M suivants s'effectue de la même façon que celui du lit M2.

Dans un quatrième temps, ils sont mobiles horizontalement d'aval en amont respectivement entre leurs positions 8d, 9d, 8f 9f et autres, et leurs positions 8e 9e, 8g 9g et autres, grâce aux chariots de translation qui passent de leurs positions aval 10' à leurs positions amont 10. A partir de l'empilage du deuxième lit M les bras 9 (ou les palettes 21 le cas échéant), qui reposent sur le lit précédemment posé, sont pris en sandwich entre ce dernier et le lit à empiler. Au fur et à mesure que les bras 9 se retirent les cornières du lit M se déposent les unes après les autres en s'emboîtant sur les cornières du lit M précédemment posé. Dans le cas d'utilisation de palettes 21, les cornières glissent sur le déflecteur 31 avant d'être déposées sur lit M précédemment posé. Le déflecteur 31 permet de réduire la hauteur de chute des cornières.

Suivant le mode préférentiel de réalisation où les bras 9 présentent une différence de longueur (voir figure 8) l'empilage de chaque cornière est réalisé en deux temps pour éviter un basculement indésirable de celle-ci. Lorsque les bras 9 se retirent, l'extrémité de la première cornière du lit M reposant sur le bras le plus court -qui s'efface donc en premier lieu- tombe dans un premier temps en s'emboîtant sur deux cornières du lit M précédemment déposé, tandis que son autre extrémité est encore supportée par le bras le plus long. Dans un deuxième temps le bras le plus long s'effaçant à sont tour laisse tomber l'autre extrémité de la première cornière qui prend sa position définitive dans le fardeau F en même temps que le bras le plus court laisse tomber l'extrémité de la deuxième cornière qui repose encore par son autre extrémité sur le bras le plus long et ainsi de suite.

Le dispositif d'empilage automatique selon l'invention offre un large éventail de possibilités de fonctionnement, l'utilisation d'une série de jeux de peignes 2 et de râteaux 8 permettant la formation de fardeaux aux différentes largeurs commerciales désirées.

Pour simplifier l'explication du cycle complet du fonctionnement séquentiel du dispositif automatique d'empilage de l'invention, on partira des données suivantes :

- les pas d'avance du transporteur T sont identiques, celui-ci progressant à chaque pas d'une distance égale à la zone z 2 (ou z 3) et correspondant à la longueur des peignes 2 utilisés, majorée de deux épaisseurs de cornière.

- les peignes 2, le volet 4, les râteaux 8 et les bras 9 traitent dans leurs zones d'action respectives un même nombre de cornières. Autrement dit, on considère uniquement le cas d'utilisation de peignes 2 et de râteaux 8 à quatre dents permettant de former, de transporter et d'empiler des lits M de sept cornières.

Le fonctionnement du dispositif d'empilage 1 sera aisément compris en se reportant à la figure 2 où les éléments fonctionnels du dispositif sont représentés d'une part en traits continus dans leurs positions de repos et d'autre part en traits pointillés dans les différentes positions remarquables qu'ils occupent en cours de fonctionnement. En particulier, pour une meilleure compréhension du fonctionnement des systèmes de manutention et d'empilage 7, les râteaux 8 et les bras 9 sont représentés dans les différentes positions successives 8a 9a à 8g 9g retraçant trois cycles complets de fonctionnement, ces dernières positions 8g 9g étant celles qu'occupent les râteaux et les bras en fin de séquence 28. Par ailleurs, il est à préciser que les cornières sont représentées, d'une part en trait continu dans les positions qu'elles occupent en fin de séquence 23, sur le transporteur T, la table 6 et le transporteur T1, et d'autre part en traits pointillés dans les positions qu'elles occupent en fin de séquence 28 sur les éléments fonctionnels du dispositif. Ainsi on peut voir :

     - en traits continus, le premier lit M1 déjà posé sur le transporteur T1, le deuxième lit M2 reposant sur la table 6, le troisième lit M3 reposant sur le transporteur T en zone z 4, une nappe de sept cornières alternées $\Lambda$L reposant sur le transporteur T en zone z 3, une nappe de sept cornières en position $\Lambda$ reposant sur le transporteur T en zone z 2 et enfin une nappe de n cornières en position $\Lambda$ reposant sur le transporteur T en zone z 1.

     - en traits pointillés, le deuxième lit M2 reposant sur les bras occupant leurs positions d'empilage 9f et de transport hautes aval 9c et hautes amont 9b, le troisième lit M3 reposant sur les râteaux occupant leurs positions de transport hautes aval 8c et hautes amont 8b, et enfin en zone z 2, les sept cornières telles que reposant sur les peignes occupant leurs positions hautes 2'.

Séquence 1 :

Le transporteur T est mis en route. Il avance.

Séquence 2 :

La zone z 1 du transporteur est alimentée en continu par des cornières C en position Λ.

Séquence 3 :

Les peignes 2 sont levés jusqu'à une position intermédiaire non figurée dans laquelle ils s'opposent au passage des cornières C.

La première cornière C arrive en butée et s'aligne contre les flancs amont des peignes au point P1. Le transporteur continuant d'avancer, les cornières C suivantes se rangent côte à côte par ripage.

Séquence 4 :

Le transporteur s'arrête.

Séquence 5 :

Les peignes descendent et reviennent à leurs positions 2.

Séquence 6 :

Le transporteur avance d'un premier pas.

Séquence 7 :

Les cornières sont comptées par le compteur 41 monté au point P1.

Séquence 8 :

Le transporteur s'arrête dès que la première cornière C1 atteint le point P2 où est monté le fin de course 42.

Une première nappe de sept cornières C1 à C7 en position Λ occupe la zone z 2.

Séquence 9 :

L'arrêt du transporteur par le fin de course 42 commande simultanément les peignes 2 :

Les peignes montent à leurs positions hautes 2'

- la nappe de cornières C1 à C7 est soulevée au passage

21        **0142433**

et les cornières C2, C4 et C6 sont basculées de 135°, les sept cornières occupant leurs positions hautes C1' à C7'

Les peignes redescendent aussitôt à leurs positions basses 2.

– les cornières qui sont redéposées au passage sur la zone z 2 du transporteur T occupent les positions alternées C1, C2', C3, C4', C5, C6' et C7 figurées en zone 3 (pour ne pas surcharger la figure 2)

Séquence 10 :

Les peignes ayant regagné leurs positions basses 2, le transporteur avance d'un deuxième pas.

Séquence 11 :

Sept cornières d'une deuxième nappe sont comptées par le compteur 41.

Séquence 12 :

Le transporteur s'arrête dès que la première cornière C1 de la deuxième nappe atteint le point P2.

. La première nappe de cornières alternées C1, C2', C3, C4', C5, C6' et C7 occupe la zone z 3, la cornière C1 étant située au point P3.

. La deuxième nappe de cornières C1 à C7 en position ∧ occupe la zone z 2.

Séquence 13 :

L'arrêt du transporteur par le fin de course 42 commande les peignes 2 qui effectuent un deuxième cycle complet de fonctionnement agissant sur la deuxième nappe de cornières.

Séquence 14 :

Les peignes ayant regagné leurs positions basses 2, le transporteur avance d'un troisième pas.

Séquence 15 :

Sept cornières d'une troisième nappe sont comptées par le compteur 41.

Séquence 16 :

Le transporteur s'arrête dès que la première cornière C1 de la troisième nappe atteint le point P2.

. Les cornières alternées C1, C2', C3, C4', C5, C6' et C7 de la première nappe provenant de la zone $z_3$ sont mariées en zone $z_4$ grâce au volet 4 et aux butées 5 de mariage, la cornière C1 étant située au point P4. Un premier lit M1 (correspondant au lit repéré M3 sur la figure) est formé en zone $z_4$ par les cornières qui occupent alors les positions C1, C2", C3, C4", C5, C6" et C7.

- la deuxième nappe de cornières C1, C2', C3, C4', C5, C6' et C7 occupe la zone $z_3$.

. La troisième nappe de cornières C1 à C7 en position $\Lambda$ occupe la zone $z_2$.

- l'arrêt du transporteur par le fin de course 42 commande simultanément :

Séquence 17 :

Les peignes 2 qui effectuent un troisième cycle complet de fonctionnement agissant sur la troisième nappe de cornières.

Séquence 18 :

Les systèmes de manutention et d'empilage 7 qui effectuent un premier cycle de fonctionnement. Partant de leurs positions intermédiaires amont 8a 9a les râteaux et les bras montent. Au passage le premier lit M1 formé à la zone $z_4$ est soulevé par les râteaux. Dès que les râteaux atteignent leurs positions hautes 8b, les chariots qui sont à leurs positions amont 10 se déplacent latéralement jusqu'à leurs positions aval 10'. Les râteaux et les bras qui occupent alors leurs positions hautes aval 8c 9c en zone $z_5$, $z_6$ descendent. Au passage le lit M1 (correspondant au lit repéré M2 sur la figure) est déposé sur la table 6 de la zone $z_5$ par les râteaux, la première cornière C1 du lit M1 étant située au point P5. Les râteaux ayant atteint une position intermédiaire aval (non figurée pour ne pas surcharger la figure). Les chariots se déplacent latéralement pour reprendre leurs positions amont 10, les râteaux et les bras reprenant leurs positions intermédiaires amont 8a, 9a.

Séquence 19 :

Dès que les râteaux ont déposé le lit M1 sur la table 6 et que les peignes ont regagné leurs positions basses 2, le transporteur avance d'un quatrième pas.

Séquence 20 :

Sept cornières d'une quatrième nappe sont comptées par le compteur 41.

Séquence 21 :

Le transporteur s'arrête dès que le première cornière C1 de la quatrième nappe atteint le point P2.

. les cornières alternées C1, C2', C3, C4', C5, C6' et C7 de la deuxième nappe provenant de la zone $z_3$ sont mariées en zone $z_4$ pour former un deuxième lit M2 (correspondant au lit repéré M3 sur la figure)

. la troisième nappe occupe la zone $z_3$.

. la quatrième nappe occupe la zone $z_2$.

– l'arrêt du transporteur par le fin de course 42 commande simultanément :

Séquence 22 :

– les peignes 2 qui effectuent un quatrième cycle complet de fonctionnement agissant sur la quatrième nappe.

Séquence 23 :

– les systèmes de manutention et d'empilage 7 qui effectuent un deuxième cycle complet de fonctionnement. Partant de leurs positions intermédiaires amont, les râteaux 8a en zone $z_4$ et les bras 9a en zone $z_5$ montent simultanément en soulevant, au passage, respectivement le lit M2 formé à la zone $z_4$ et le lit M1 posé en attente sur la table 6. Dès que les râteaux et les bras sont à leurs positions hautes amont 8b, 9b les chariots qui sont à leurs positions amont 10 se déplacent latéralement jusqu'à leurs positions aval 10' où les râteaux et les bras viennent occuper leurs positions respectives hautes aval 8c en zone $z_5$ et hautes aval 9c en zone $z_6$. Partant de ces dernières positions, les râteaux et les bras descendent et déposent respectivement au passage d'abord le lit M2 sur la table 6 en zone $z_5$, puis le lit M1 entre les berceaux B sur le transporteur T1 en zone $z_6$, la première cornière C1 du lit M1 venant se situer au point P6. Les

24 0142433

râteaux et les bras ayant atteint leurs positions basses respectives 8d, 9d, les chariots se déplacent latéralement pour reprendre leurs positions amont 10, les râteaux et les bras occupant leurs positions basses amont 8e, 9e.

Séquence 24 :

Dès que les râteaux ont déposé le lit M2 sur la table 6 et que les peignes ont regagné leurs positions basses 2, le transporteur avance d'un cinquième pas pendant que les bras déposent le lit M1 sur le transporteur T1.

Séquence 25 :

Sept cornières d'une cinquième nappe M5 sont comptées par le compteur 41.

Séquence 26 :

Le transporteur s'arrête dès que la première cornière C1 de la cinquième nappe atteint le point P2.

. les cornières alternées C1, C2', C3, C4', C5, C6' et C7 de la troisième nappe provenant de la zone z 3 sont mariées en zone z 4 pour former un troisième lit M3.

. la quatrième nappe occupe la zone z 3

. la cinquième nappe occupe la zone z 2

L'arrêt du transporteur par le fin de course 42 commande simultanément :

Séquence 27 :

Les peignes 2 qui effectuent un cinquième cycle complet de fonctionnement agissant sur la cinquième nappe.

Séquence 28 :

Les systèmes de manutention et d'empilage 7 qui effectuent un troisième cycle complet de fonctionnement. Partant de leurs positions basses amont 8e, 9e, les râteaux et les bras montent en soulevant au passage respectivement le lit M3 formé à la zone z 4 et le lit M2 posé en attente sur la table 6. Dès que les râteaux et les bras sont à leurs positions hautes amont 8b, 9b les chariots qui sont à leurs positions amont 10 se déplacent latéralement jusqu'à leurs positions aval 10' où les râteaux et les bras viennent occuper leurs positions respectives hautes aval 8c en zone z 5 et hautes aval 9c en zone z 6. Partant de ces dernières positions, les râteaux et les bras descendent pour occuper en fin de course leurs positions 8f, 9f dans lesquelles les bras reposent sur le lit M1 précédemment posé, les râteaux ayant préalablement déposé au passage le lit M2 sur la table 6. Les bras ayant atteint leurs positions 9f les chariots se déplacent latéralement pour reprendre leurs positions amont 10, les râteaux et les bras occupant alors leurs positions amont 8g 9g.

Séquence 29 :

Dès que les râteaux ont déposé le lit M2 sur la table 6 et que les peignes ont regagné leurs positions basses 2 le transporteur avance d'un sixième pas pendant que les bras empilent le lit M2 sur le transporteur T1.

A partir de ce moment, l'empilage de chacun des lits M suivants s'effectue de façon répétitive selon les séquences 25 à 29 précédemment décrites.

Des modifications peuvent être apportées en variante, au dispositif d'empilage sans sortir du cadre de l'invention, par exemple :

- la zone neutre z 3 peut être supprimée en positionnant les peignes et les chariots de sorte qu'ils n'interfèrent pas entre eux. Dans ce cas, le mariage des cornières est effectué immédiatement en aval de la zone z 2.

- la zone z 5 peut être supprimée. Dans ce cas les chariots sont équipés chacun uniquement d'un bras d'empilage assurant directement le transport du lit M de la zone z 4 à la zone z 6.

REVENDICATIONS.

1. Procédé d'empilage de cornières pour former des fardeaux (M1, M2,...) de cornières (C) constitués par la superposition de lits (M) de cornières mariées (C1, C2",...) à partir d'une nappe de cornières (C) disposées en $\Lambda$ , caractérisé en ce que

a) on détermine dans la nappe une section de cornières successives (C1 à C7) devant constituer un lit (M) de cornières mariées,

b) on bascule dans ladite section une cornière (C2, C4,...) sur deux de sa position initiale en $\Lambda$ à sa position finale en V (C2", C4").

c) on maintient les cornières basculées (C2", C4",...) dans ladite position finale en V,

d) on resserre des cornières (C1, C2", C3, C4") de la section de manière à former un lit (M) de cornières mariées,

e) on dispose le lit (M) de cornières mariées sur les autres lits précédemment formés (M1,...).

2. Procédé selon la revendication 1, caractérisé en ce que, pour basculer une cornière (C2, C4,...) sur deux de sa position initiale en $\Lambda$ à sa position finale en V, on opère en deux phases

b1) On déplace verticalement vers le haut le bord longitudinal d'une aile de la cornière (C2,...) dans la position initiale en $\Lambda$ relativement au bord longitudinal de l'autre aile, de manière à faire basculer la cornière dans une position intermédiaire en L, (C2',...)

b2) On déplace horizontalement le bord longitudinal de l'aile verticale de la cornière (C2',...) dans la position intermédiaire en L, relativement au bord longitudinal de l'autre aile, de manière à faire basculer la cornière dans la position finale en V (C2", ...).

3. Procédé selon l'une quelconque des revendications 1 ou 2, caractérisé en ce que pour disposer le lit (M) de cornières mariées sur les autres lits précédemments formés (M1,...) on opère en deux phases : une première phase dans laquelle on soulève le lit (M) puis on le déplace pour le poser sur une table d'attente (6), et une deuxième phase dans laquelle on reprend le lit sur la table (6) pour le disposer sur les autres lits précédemment formées (M1,...).

4. Dispositif d'empilage de cornières pour former des fardeaux (M1, M2, ...) de cornières (C) constitués par la superposition de lits de cornières mariées (C1, C2",...) à partir d'une nappe de cornières (C) disposées en Λ, caractérisé en ce qu'il comprend :

a) des moyens (2) pour déterminer dans la nappe une section de cornières successives (C1 à C7) devant constituer un lit (M) de cornières mariées,

b) des moyens (2; 4) pour basculer, dans ladite section, une cornière (C2, C4,...) sur deux de sa position initiale en Λ à sa position finale en V (C2", C4", ...),

c) des moyens (4A) pour maintenir les cornières basculées (C2", C4") dans ladite position,

d) des moyens (T,5) pour resserrer des cornières (C1, C2", C3, C4") de la section finale en V, de manière à former un lit (M) de cornières mariées,

e) des moyens (7) pour disposer le lit (M) de cornières mariées sur les autres lits précédemment formés (M1,...).

5. Dispositif selon la revendication 4, caractérisé en ce que les moyens (2, 4) pour basculer une cornière sur deux de sa position initiale en Λ à sa position finale V comprennent :

b1) des moyens (r1, r2, r3) pour déplacer verticalement vers le haut le bord longitudinal d'une aile de la cornière (C2, ...) dans la position initiale en Λ relativement au bord longitudinal de l'autre aile, de manière à faire basculer la cornière dans une position intermédiaire en L (C2', ...),

b2) des moyens (4,T) pour déplacer horizontalement le bord longitudinal de l'aile verticale de la cornière dans la position intermédiaire en L (C2', ...) relativement au bord longitudinal de l'autre aile, de manière à faire basculer la cornière dans la position finale en V (C2",...).

6. Dispositif selon la revendication 5, caractérisé en ce que les moyens (2) pour déterminer ladite section et les moyens (r1, r2, r3) pour déplacer verticalement vers le haut le bord longitudinal d'une aile sont constitués par au moins deux peignes (2) mobiles verticalement entre une position basse où ils se trouvent sous la nappe de cornières et une position haute où ils se trouvent au dessus de ladite nappe, ces peignes comportant d'une part des dents (d1 à d4) destinées à s'emboîter dans les cornières (C1, C3, C5, C7) devant rester dans leur position en $\wedge$ , et, entre deux dents, des enfoncements rectangulaires (e1, e2, e3) coopérant avec un rebord (r1, r2, r3) destiné à soulever un bord de la cornière à basculer (C2, C4, C6).

7. Dispositif selon l'une quelconque des revendications 5 ou 6, caractérisé en ce que les moyens (4,T) pour déplacer horizontalement le bord longitudinal d'une aile et les moyens pour maintenir une cornière basculée dans sa position en $V$ , sont constitués par un volet horizontal (4) placé au dessus du lit (M) en formation sensiblement au niveau du sommet des cornières en $\wedge$, ce volet coopérant avec des moyens (T) d'entraînement latéral horizontal des cornières.

8. Dispositif selon l'une quelconque des revendications 4 à 7, caractérisé en ce que les moyens (T, 5) de resserrement des cornières comprennent des butées latérales fixes (5) coopérant avec des moyens (T) d'entraînement latéral par friction des cornières.

9. Dispositif selon l'une quelconque des revendications 4 à 8, caractérisé en ce que les moyens pour disposer le lit (M) de cornières mariées sur les autres lits précédemment formés (M1, ...) comprennent un ensemble de manutention (7) mobile verticalement et horizontalement, comportant des bras supports horizontaux (9) s'étendant perpendiculairement aux cornières.

10 Dispositif selon la revendication 9, caractérisé en ce que l'ensemble de manutention comporte deux bras (9) de longueurs inégales.

**0142433**

11. Dispositif selon l'une quelconque des revendications 9 ou 10, caractérisé en ce que les bras (9) du dispositif de manutention (7) comportent des butées (19,20) éclipsables par rapport à une palette de support (21).

12. Dispositif selon l'une quelconque des revendications 8 à 10, caractérisé en ce que l'ensemble de manutention (7) comprend des râteaux (8) pour soulever le lit (M) de cornières mariées, puis le déplacer pour le poser sur une table d'attente (6) associée à l'ensemble (7), les bras supports (9) reprenant le lit sur la table (6) pour le disposer entre des berceaux (B) sur les autres lits précédemment formés (M1,...).

Fig. 1

Fig. 2

0142433

Fig.5

Fig.4

## Fig.3a

## Fig.3b

## Fig.3c

## Fig.3d

0142433

Fig.6a

Fig.5

Fig.7a

0142433

Fig.6b

Fig.7b

Office européen
des brevets

**RAPPORT DE RECHERCHE EUROPEENNE**

**0142433**
Numéro de la demande

EP 84 40 2247

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 435 420  (ELINEAU) | | B 65 G   57/18 |
| | --- | | |
| A | EP-A-0 092 093  (PONT-A-MOUSSON) | | |
| | * Abrégé; figures 1,2 * | | |
| | ----- | | |

|  |
|---|
| DOMAINES TECHNIQUES RECHERCHES (Int. Cl.4) |
| B 65 G   57/00 |
| B 65 G   47/00 |

Le présent rapport de recherche a été établi pour toutes les revendications

| Lieu de la recherche | Date d'achèvement de la recherche | Examinateur |
|---|---|---|
| LA HAYE | 08-01-1985 | MORRIS A.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82